# EUROPÄISCHE PATENTANMELDUNG

(11) **EP 0 775 648 A2**
(43) Veröffentlichungstag der Anmeldung: **28.05.1997**
(21) Anmeldenummer: 96117903.3
(22) Anmeldetag: 08.11.1996
(51) Int. Cl.: B65G 15/30

(54) **Transportband mit einem Laufseitengewebe**

(30) Priorität: 25.11.1995 DE 19543975
(71) Anmelder: FORBO International S.A., 8193 Eglisau/Zürich (CH)
(72) Erfinder: Mitsutsuka, Yoshinori, Hamamatsu-City, Shizuoka Prefecture (JP); Tope, Hans-Georg, 30853 Langenhagen (DE); König, Burkhard, Dipl.-Ing., 31535 Neustadt (DE)
(74) Vertreter: Braun, Dieter, Dipl.-Ing. Patentanwälte Hagemann & Kehl

(57) **Zusammenfassung**

Beschrieben wird ein Transportband (1) mit einem Laufseitengewebe (2), das Stapelfasergarn (6) enthält, das eine Köperbindung mit einem Steigungswinkel von 10 ° bis 70 ° zur Laufrichtung des Transportbandes (1) mit gleicher Schlagrichtung benachbarter Garne (6) aufweist. Die Erfindung ist dadurch gekennzeichnet, daß das Stapelfasergarn (6) im Laufseitengewebe (2) als Kettgarn vorliegt, dessen benachbarte Game (6), die je Garn (6) in ihrer Längsrichtung die gleiche Schlagrichtung aufweisen, abwechselnd S und Z gedreht sind, und daß im Transportband (1) zusätzlich die Zugkräfte aufnehmende Elemente (4) angeordnet sind, die in einem Gewebe angeordnet oder die als Fäden von Stapelfasern ummantelt sind. Da das Stapelfasergarn (6) der Kette des Laufseitengewebes (2) diagonal über die volle Breite des Laufbandes (1) verläuft, ergibt sich auch bei einem Kantenablauf eine endlose Auflage des Stapelfasergarns (6). Es wird ein absolut gleichförmiger schwingungsfreier und geräuscharmer Lauf des Transportbandes (1) auch bei einem Kantenablauf erreicht.

## Beschreibung

Die Erfindung bezieht sich auf ein Transportband gemäß dem Oberbegriff des Anspruchs 1.

Bei Transportbändern ist unter gewissen Einsatzbedingungen das Laufgeräusch störend. Um hier Abhilfe zu schaffen, ist es durch die gattungsbildende JP-Patent-Puplication No.: 5176/95 (JP-B2-7-5176) bereits bekannt geworden, im Schuß des Laufseitengewebes, das eine Köperbindung mit einen Steigungswinkel von 10 ° bis 70 ° zur Laufrichtung des Transportbandes aufweist, Stapelfasergarne einzusetzen. Hierdurch ist es zwar bereits gelungen, die Gleitgeräusche bei Transportbändern zu reduzieren, jedoch können bei diesen Laufseitengeweben bei einem Kantenablauf der eine Erhebung bildende Schuß im Laufband starke Geräusche erzeugen. Es kommt dabei an jedem Schußfaden zu stoßartigen Einwirkungen der Kante, die eine Schwingung des Transportbandes, verbunden mit einer Geräuschentwicklung, erzeugen.

In der Entgegenhaltung DE-GM 6 902 532 ist bereits beschrieben, als Gewebeeinlage für Förderbänder ein übliches Kreuzgewebe mit Spitzköperstruktur zu verwenden. Hier soll eine höhere Gewebedichte erreicht und die Festigkeit des Gewebekerns gesteigert werden. Außerdem soll gegenüber herkömmlichen Gewebeeinlagen eine größere Flexibilität und durch den Einsatz einer verzwirnten Zellulosestapelfaser eine gesteigerte Strukturfestigkeit erreicht werden. Die verzwirnte Zellulosestapelfaser soll ferner die Anbindung der Gewebeeinlage verbessern.

Aus der DE 89 00 626.7 U1 ist bekannt geworden, bei einem Transportband zur Verbesserung der Laufruhe die Laufseite als Flordecke einer Plüschgewebebahn auszubilden. Im übrigen ist in dem Transportband eine als unaufgeschnittenes Doppelplüschgewebe ausgebildete Gewebelage angeordnet. Das Doppelplüschgewebe weist ein Ober- und ein Untergewebe mit an den Schußfäden angebundenen Polfäden auf. Die im Transportband auftretenden Zugkräfte werden dabei von dem Ober- und dem Untergewebe aufgenommen.

Die DE 43 39 709 A1 befaßt sich mit der Erhöhung der Festigkeit von mehrlagigen Nadelfliesen, die Stapelfasern enthalten, und die in Förderbändern oder aber auch als Filtermedium zum Einsatz kommen sollen.

Vogelsberg, "neue Verseilverfahren für Nachrichtenkabel", Siemens-Zeitschrift 50 (1976), Heft 10, hat die Schläge einer Verseilung mit S-, Z- und SZ-Verseilung angegeben.

Der Erfindung liegt die Aufgabe zugrunde, ein ohne erwähnenswerte Laufgeräusche laufendes Transportband mit einem Stapelfasergarn enthaltenden Laufseitengewebe so zu gestalten, daß es auch bei einem Kantenablauf keine erwähnenswerten Laufgeräusche trotz hoher Bandzugkräfte und guter Geradlaufeigenschaften aufweist.

Diese Aufgabe wird erfindungsgemäß durch die Merkmale des Anspruchs 1 gelöst.

Die weitere Ausgestaltung der Erfindung ist den Unteransprüchen zu entnehmen.

Dadurch, daß lösungsgemäß das Stapelfasergarn im Laufseitengewebe als Kettgarn, und wechselnd S und Z gedreht, nebeneinander liegend eingesetzt ist und daß das Laufseitengewebe eine Köperbindung mit einem Steigungswinkel von 10 ° bis 70 °, vorzugsweise 30 °, zur Laufrichtung des Transportbandes aufweist und daß im Transportband zusätzlich die Zugkräfte aufnehmende Elemente angeordnet sind, wird es ermöglicht, in der Kette Stapelfasergarne einzusetzen, und es wird so bei einem Kantenablauf des Transportbandes erreicht, daß das diagonal über die volle Breite des Bandes verlaufende Stapelfasergarn dieses stufenlos über die Kanten gleiten läßt. Zusätzlich zu dem Vorteil der leicht gleitenden Anlage der Stapelfasern ergibt sich ein unter allen Bedingungen absolut gleichförmiger schwingungsarmer, geräuscharmer Lauf des Transportbandes, unter anderem durch die wechselnde Schlagrichtung der Garne.

Außerdem sind im Transportband zusätzlich zum Laufseitengewebe die Zugkräfte aufnehmende Elemente angeordnet. Diese erhöhen die Zugfestigkeit, da die in der Kette angeordneten Stapelfasergarne nur eine geringe Zugfestigkeit aufweisen. Einerseits ist dabei das die Zugkräfte aufnehmende Element von einem Gewebe gebildet. Andererseits ist es jedoch auch möglich, daß das Stapelfasergarn lediglich die Ummantelung eines oder mehrerer, die Zugkräfte aufnehmender Fäden bildet. Auch hier liegt das Stapelfasergarn an der Oberfläche und bewirkt den beschriebenen geräuschdämpfenden Effekt.

Gemäß einer bevorzugten Ausführungsform der Erfindung weist das Laufseitengewebe eine Spitzköperbindung auf. Hier ergibt sich neben einer sich aus dem Steigungswinkel das Spitzköpers ergebenden gleichmäßigen Anlage des an der Oberfläche des Laufseitengewebes liegenden Stapelfasergarns auch an Kanten, zusätzlich ein optimaler Geradeauslauf des Transportbandes aufgrund der zueinander winkeligen Anordnung.

Der gleiche Vorteil ergibt sich, sofern das Laufseitengewebe eine Köperbindung in Fischgratanordnung aufweist. Auch hier begünstigt der winkelig zueinander verlaufende Köper den Geradeauslauf des Transportbandes.

Optimale Verhältnisse ergeben sich insbesondere dann, sofern das Laufseitengewebe von einem Spitzköper aus K 2/1 gebildet ist. Hier ergibt sich ein besonders vorteilhafter Steigungswinkel von etwa 30 ° zur Laufrichtung des Transportbandes.

Im Rahmen der Gestaltung der Erfindung ist es weiterhin vorgesehen, daß das Laufseitengewebe einen monofilen Schuß aufweist. Aus dem monofilen Schuß ergibt sich die Möglichkeit, die Quersteifigkeit des Transportbandes zu erhöhen, so daß sich eine gute Planlage des Transportbandes ergibt.

In der Zeichnung sind Ausführungsbeispiele der Erfindung dargestellt und werden im folgenden näher beschrieben. Es zeigen:
Figur 1, ein Laufseitengewebe in Spitzköperbindung, in vergrößerter fotographischer Darstellung;
Figur 2, die Basispatrone eines Laufseitengewebes, bestehend aus einem Spitzköper aus Köper 2/1;
Figur 3, einen Bindungsquerschnitt durch den Spitzköper aus Köper 2/1;
Figur 4, ein Laufseitengewebe in Fischgratbindung aus Köper 2/1;
Figur 5, einen Bindungsquerschnitt durch die Fischgratbindung aus Köper 2/1;
Figur 6, einen Querschnitt durch ein erfindungsgemäßes Transportband.

In der Zeichnung ist mit 1 ein Transportband bezeichnet, das, wie aus Figur 6 ersichtlich, ein Laufseitengewebe 2 aufweist, das über eine die Verbindung herstellende Zwischenschicht 3 mit einem die Zugkräfte aufnehmenden Element 4 verbunden ist. Das Element 4 ist hier als Gewebe ausgebildet. Auf dem die Zugkräfte aufnehmenden Gewebe ist eine Funktionsbeschichtung 5 angeordnet, auf der das in der Zeichnung nicht dargestellte Gut transportiert wird.

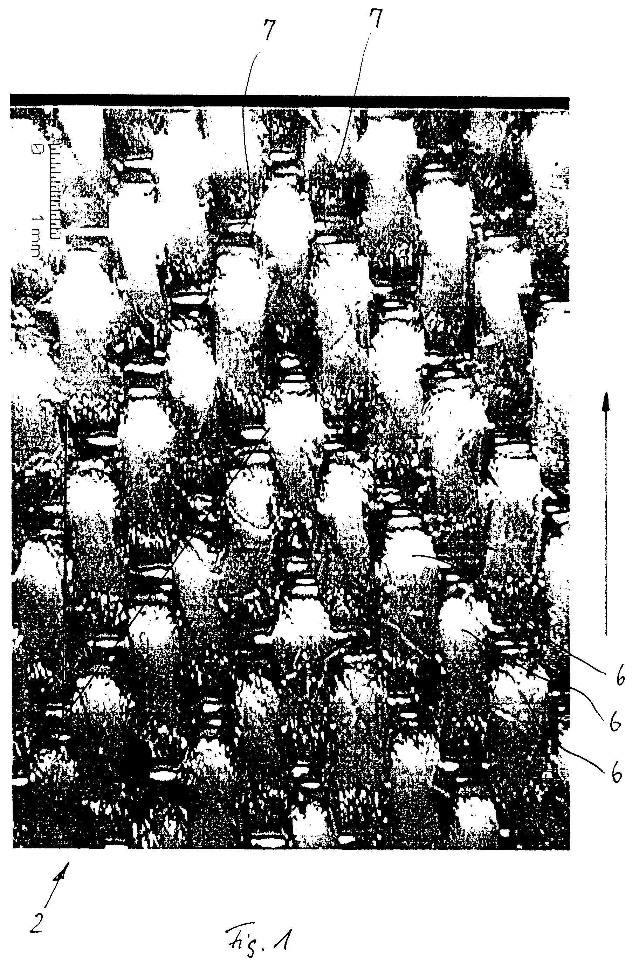

Aus der Figur 1 ist ersichtlich, daß in dem Laufseitengewebe 2 Stapelfasergarn 6 als Kettgarn angeordnet ist. Das Laufseitengewebe 2 weist außerdem einen monofilen Schuß 7 auf. Da das Laufseitengewebe 2 eine Spitzköperbindung aufweist, verläuft das Stapelfasergarn 6 an der Oberfläche winkelig zur Laufrichtung des Transportbandes 1. Das Stapelfasergarn 6 weist zudem einen deutlich größeren Durchmesser auf, als der monofile Schuß 7. Es ist so ein stoßfreier Kantenablauf des Laufseitengewebes 2 erreicht worden. Wie sich gezeigt hat, ergibt sich aus dem stoßfreien Gleiten eine deutliche Reduzierung des Laufgeräusches von Transportbändern 1. Wie sich gezeigt hat, bieten Kettfäden mit Fadenstärken ab Nm 34/2 genügend Bauschigkeit, um den angestrebten Effekt einer stufenlosen und weichen Anlage zu erzielen. Durch die Spitzköperbindung ist der monofile Schuß 7 abgedeckt.

Die Ausbildung des Laufseitengewebes 2 in Spitzköperbindung stellt darüberhinaus den Geradeauslauf derartig aufgebauter Transportbänder 1 sicher.

In einer bevorzugten Ausführungsform besteht der Kettfaden aus ring-gesponnenem Stapelfasergarn 6 mit 60 mm Stapellänge aus Polyesterfilament der Feinheit 3,3 dtex. Der Faden ist mit 300 Touren pro Meter gedreht, wobei S und Z gedrehte Fäden sich abwechseln. Der Schuß 7 besteht aus 0,3 mm Polyestermonofilament. Die Bindung ist Spitzköper aus Köper K 2/1, 2 cm breit wechselnd.

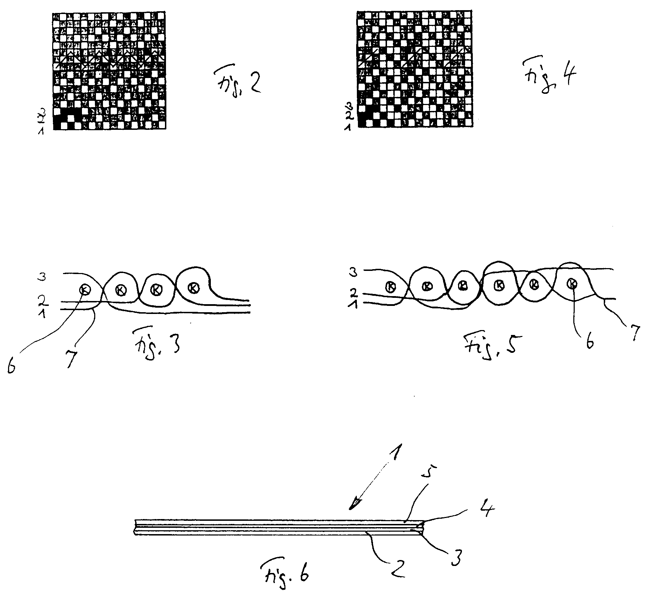

Aus der Figur 2 ist der grundsätzliche Aufbau eines Spitzköpers aus K 2/1 erkennbar. Aus der Figur 3 ist ersichtlich, wie der monofile Schuß 7 um das die Kette bildende Stapelfasergarn 6 herumgeführt ist.

Die Figur 4 zeigt den grundsätzlichen Aufbau eines Fischgrat aus K 2/1. Ergänzend ist aus dem Kettschnitt der Figur 5 der Verlauf von Schuß 7 und Stapelfasergarn 6 ersichtlich.

Grundsätzlich ist es erfindungsgemäß möglich, beispielsweise auch die drei klassischen Köperbindungen, Köper 2/1, Köper 3/1 und Köper 2/2, einzusetzen. In der klassischen Köperbindung ergeben sich jedoch schräg zur Laufrichtung gerade verlaufende, vom Stapelfasergarn 6 gebildete Auflageflächen, die unter gewissen Bedingungen zu einem Schieflaufen des Transportbandes führen können. Wie bereits ausgeführt, wird durch den Spitzköper ein Schieflaufen vermieden. Grundsätzlich gilt, daß sich ein desto steilerer Steigungswinkel des Köpergrades ergibt, je dichter das Stapelfasergarn 6 angeordnet ist. Je offener die Einstellung ist, desto flacher ist der Köpergrad. Durch die Fischgratbindung ergibt sich bei einem Kantenablauf des Laufseitengewebes 2 ein endloser Übergang der Stapelfasergarne 6, der bewirkt, daß an den Kanten Querstöße vermieden werden und so eine bisher nicht erreichte Geräuscharmut des Transportbandes 1 erzielt wird.

## Patentansprüche

1. Transportband (1) mit einem Laufseitengewebe (2), das Stapelfasergarn (6) enthält, das eine Köperbindung mit einem Steigungswinkel von 10 ° bis 70 ° zur Laufrichtung des Transportbandes (1) mit gleicher Schlagrichtung benachbarter Game (6) aufweist, dadurch gekennzeichnet, daß das Stapelfasergarn (6) im Laufseitengewebe (2) als Kettgarn vorliegt, dessen benachbarte Garne (6), die je Garn (6) in ihrer Längsrichtung die gleiche Schlagrichtung aufweisen, abwechselnd S und Z gedreht sind, und daß im Transportband (1) zusätzlich die Zugkräfte aufnehmende Elemente (4) angeordnet sind, die in einem Gewebe angeordnet oder die als Fäden von Stapelfasern ummantelt sind.

2. Transportband (1) nach Anspruch 1, dadurch gekennzeichnet, daß die Köperbindung einen Steigungswinkel von 30 ° aufweist.

3. Transportband (1) nach Anspruch 1, dadurch gekennzeichnet, daß das Laufseitengewebe (2) einen monofilen Schuß (7) und des als Kettfaden eingesetzte Stapelfasergarn (6) eine Fadenstärke von wenigstens Nm 34/2 aufweist.

4. Transportband (1) nach einem oder mehreren der Ansprüche 1 bis 3, dadurch gekennzeichnet, daß das Laufseitengewebe (2) eine Spitzköperbindung aufweist.

5. Transportband (1) nach einem oder mehreren der Ansprüche 1 bis 4, dadurch gekennzeichnet, daß das Laufseitengewebe (2) eine Köperbindung in Fischgratanordnung aufweist.

6. Transportband (1) nach einem oder mehreren der Ansprüche 1 bis 4, dadurch gekennzeichnet, daß das Laufseitengewebe (2) von einem Köper K 2/1 gebildet ist.
